# FASCICULE DE BREVET EUROPEEN

(11) **EP 2 111 366 B1**
(45) Date de publication et mention de la délivrance du brevet: **12.09.2012**
(21) Numéro de dépôt: 08761939.1
(22) Date de dépôt: 15.01.2008
(51) Int. Cl.: B65G 51/03

(54) **DISPOSITIF DE CONVOYAGE D'OBJETS, NOTAMMENT PRÉFORMES, BOUTEILLES OU ANALOGUES, PAR SOUFFLAGE D'AIR**
VERFAHREN ZUR FÖRDERUNG VON OBJEKTEN, HAUPTSÄCHLICH VORFORMEN, FLASCHEN UND DERGLEICHEN, MITTELS LUFTBLASEN
DEVICE FOR CONVEYING OBJECTS, ESSENTIALLY PREFORMS, BOTTLES OR THE LIKE, BY AIR BLOWING

(30) Priorité: 22.01.2007 FR 0700422
(43) Date de publication de la demande: 28.10.2009
(73) Titulaire: Sidel Participations, 76930 Octeville Sur Mer (FR)
(72) Inventeur: DEROUAULT, Philippe, F-76930 Octeville Sur Mer (FR); CHARPENTIER, Alain, F-76930 Octeville Sur Mer (FR); LINGLET, Stéphane, F-76930 Octeville Sur Mer (FR)
(74) Mandataire: Cabinet Plasseraud
(86) Numéro de dépôt international: PCT/FR2008/050068
(87) Numéro de publication internationale: WO 2008/099118

(56) Documents cités:
- EP-A2- 1 321 394
- US-A- 5 567 091
- US-B1- 6 854 586

## Description

La présente invention concerne des perfectionnements apportés aux dispositifs de convoyage d'objets, notamment de récipients en matière thermoplastique tels que préformes, bouteilles ou analogues, par soufflage d'air, ces dispositifs incluant des moyens de support et/ou de guidage desdits objets qui comprennent deux rails en vis-à-vis qui sont situés transversalement à distance l'un de l'autre et qui sont sensiblement parallèles l'un à l'autre (EP 1 321 394).

Des dispositifs de convoyage par soufflage d'air peuvent trouver une application dans les installations de fabrication d'objets, par exemple pour déplacer les ébauches ou les objets terminés, et/ou, s'agissant de récipients, dans les installations de remplissage pour déplacer les récipients en amont de l'unité de remplissage. Une application concrète concerne les installations de fabrication de récipients én matière thermoplastique, par exemple en PET, par soufflage ou étirage-soufflage de préformes chaudes, par exemple pour amener les préformes à l'unité de soufflage et/ou pour évacuer les récipients formés, et/ou ensuite pour amener les récipients vides à une unité de remplissage. Les récipients, tels que des préformes, des récipients intermédiaires ou ébauches, des bouteilles, des flacons ou récipients analogues, sont munis d'un col équipé à sa base d'une collerette de diamètre supérieur au diamètre extérieur du col et ils reposent par leur collerette sur les deux rails du dispositif de convoyage.

Dans ces installations, il est nécessaire d'éliminer les objets qui sont indésirables, par exemple parce qu'ils présentent un défaut ou parce qu'ils ne correspondent pas aux objets en cours de traitement, ou bien également on souhaite prélever quelques objets à des fins de contrôle, de test, .... Dans l'exemple précité de la fabrication et du remplissage de récipients en matière thermoplastique, il est nécessaire d'éliminer les préformes présentant des défauts ou non conformes (préformes de types différents de celui traité) avant leur introduction dans l'unité de fabrication, puis d'éliminer les récipients mal formés à la sortie de l'unité de fabrication, voire au sein même de l'unité de fabrication, puis d'éliminer les récipients endommagés avant leur introduction dans la remplisseuse ; on souhaite également effectuer des prélèvements de récipients à la sortie de l'unité de fabrication, voire au sein de celle-ci, afin de contrôler le bon déroulement du processus.

L'élimination des objets indésirables et/ou la récupération d'objets aux fins de contrôle sont réalisées lors du transfert des objets et les dispositifs de convoyage doivent être conçus de manière à permettre l'évacuation d'objets, individuellement et/ou par paquet, hors d'un flux continu d'objets pouvant être déplacés à des vitesses élevées.

A côté des moyens de détection propres à détecter les objets devant être éliminés sont mis en oeuvre des moyens d'éjection qui peuvent (notamment dans le cas de récipients tels que des préformes, des bouteilles ou analogues) comprendre une pièce mobile ou sabre animé, par exemple pneumatiquement, transversalement au trajet des objets.

Ces moyens d'éjection, qui permettent l'élimination d'objets individuellement, ont donné toute satisfaction dans les installations de fabrication et/ou de remplissage de récipients thermoplastiques réalisées à ce jour qui peuvent actuellement atteindre une cadence de l'ordre de 60 000 récipients/heure. Mais ces moyens d'éjection ne peuvent plus voir leur vitesse de fonctionnement encore accrue, et de ce fait ils ne peuvent convenir pour les installations en cours de développement qui sont conçues pour des cadences sensiblement plus élevées pouvant atteindre 80 000 récipients/heure ou plus encore.

Par ailleurs, la place disponible au sein des installations de fabrication de récipients est toujours plus comptée et l'implantation de moyens d'éjection à sabre peut s'avérer impossible.

L'invention a pour but de répondre aux diverses exigences de la pratique en proposant une solution technique simple et peu onéreuse à mettre en oeuvre en même temps qu'elle n'entraîne pas de modifications trop importantes du dispositif de convoyage.

A ces fins, l'invention propose un dispositif de convoyage d'objets par soufflage d'air, incluant des moyens de support et/ou de guidage desdits objets qui comprennent deux rails en vis-à-vis qui sont situés transversalement à distance l'un de l'autre et qui sont sensiblement parallèles l'un à l'autre, lequel dispositif de convoyage, étant agencé conformément à l'invention, se caractérise
en ce que l'un au moins desdits rails comporte un tronçon de.rail déplaçable qui est adjacent à une partie fixe, située en amont et/ou en aval, dudit rail et
en ce que des moyens d'entraînement dudit tronçon de rail, qui sont placés sous la dépendance de moyens de commande, sont propres à déplacer ledit tronçon de rail entre deux positions fonctionnelles, à savoir :
- une première position ou position de convoyage dans laquelle ledit tronçon de rail est disposé dans l'alignement de ladite partie fixe de rail située en amont et/ou en aval de manière à assurer la continuité du rail et
- une seconde position ou position effacée dans laquelle ledit tronçon de rail est déplacé hors d'alignement avec la partie fixe de rail située en amont et/ou en aval de manière à interrompre la continuité du rail, afin de créer, dans le parcours d'évacuer par gravité, un objet individuellement ou un groupe d'objets lors du flux d'objets deplacés.

Grâce à cet agencement, il est possible de créer, dans le parcours de convoyage des objets, une interruption permettant d'évacuer un objet individuellement ou un groupe d'objets hors du flux d'objets déplacés. Cette discontinuité créée dans le parcours de convoyage peut être engendrée de façon très rapide, avec une durée très brève, par un déplacement de faible amplitude d'un tronçon de rail de guidage. L'agencement proposé conformément à l'invention se révèle donc particulièrement approprié pour des installations de traitement d'objets fonctionnant à des cadences élevées qui sont actuellement requises par les utilisateurs, notamment dans le domaine de la fabrication et du conditionnement de récipients tels que bouteilles, flacons, bidons, etc., en matière thermoplastique tel que le PET.

Divers modes de réalisation peuvent être envisagés pour mettre en oeuvre la solution technique proposée par l'invention.

Un premier mode de réalisation possible peut consister en ce que le susdit tronçon déplaçable de rail soit déplaçable sensiblement parallèlement à lui-même, notamment vers le haut de manière que le ou les objets évacués puissent tomber librement par gravité.

de convoyage des objets, une interruption permettant

Toutefois, la réalisation pratique de la solution qui vient d'être évoquée nécessite des organes de guidage du tronçon de rail au cours de son déplacement, tandis que les moyens d'entraînement doivent être appropriés pour maîtriser l'inertie de l'ensemble du tronçon de rail au cours de son déplacement, lequel, il faut le rappeler, doit être extrêmement rapide sur une course d'aller-retour relativement courte, ce qui entraîne que l'ensemble de l'équipage mobile dont fait partie le tronçon déplaçable de rail est soumis à des accélérations très élevées.

De ce fait, un autre mode de réalisation possible qui est préféré en pratique consiste en ce que le tronçon de rail soit pivotant vers le bas autour de son extrémité amont ; en particulier, on peut prévoir que le tronçon de rail soit intégral avec la partie fixe de rail adjacente située en amont de ladite extrémité amont, que ladite extrémité amont soit fermement ancrée par des moyens d'ancrage et que le tronçon de rail soit courbable à partir de cette extrémité fermement ancrée.

De façon courante, il semble avantageux que les deux rails possèdent respectivement deux tronçons de rail déplaçables conjointement, de sorte que le ou les objets à évacuer soit déviés tout en restant en appui sur les deux rails et donc sans être déséquilibrés, ce qui permet d'écarter un risque de coincement des objets.

Les moyens d'entraînement du ou des tronçons déplaçables de rail peuvent être de tout type approprié d'une part au résultat à obtenir et d'autre part à l'environnement de l'installation de convoyage. En pratique, compte tenu de la rapidité de déplacement requise, il semble intéressant que les moyens d'entraînement soient du type pneumatique ou électropneumatique ou du type électromagnétique.

De façon pratique également, les moyens de commande peuvent avantageusement comprendre un capteur propre à détecter un objet indésirable devant être éjecté hors du dispositif de convoyage et disposé en amont du ou des tronçons déplaçables de rail.

Une application préférée du dispositif agencé conformément à l'invention concerne le cas où les objets à déplacer sont des récipients, tels que préformes, bouteilles, flacons ou analogues, en matière thermoplastique, notamment en PET, possédant un col muni d'une collerette annulaire saillant radialement et propre à reposer sur les deux rails.

L'invention sera mieux comprise à la lecture de la description détaillée qui suit de certains modes de réalisation donnés uniquement à titre d'exemples purement illustratifs. Dans cette description, on se réfère aux dessins annexés sur lesquels :

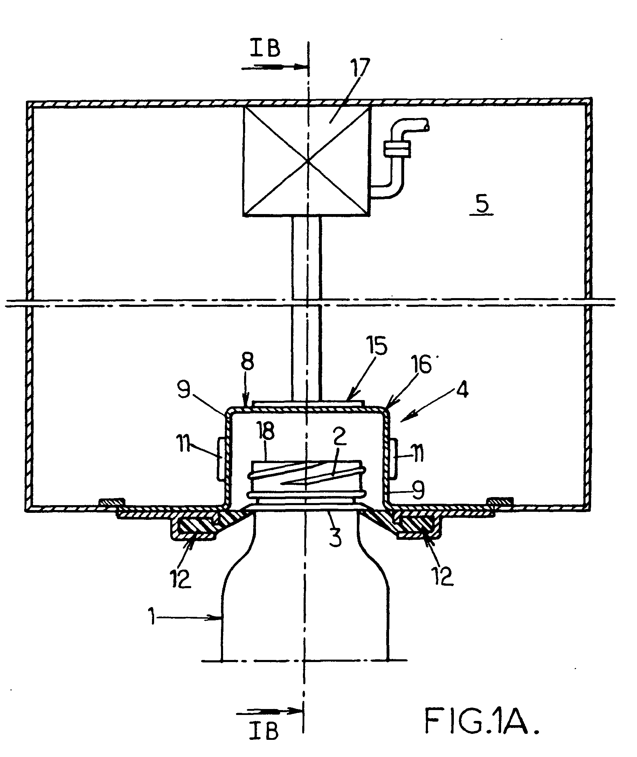

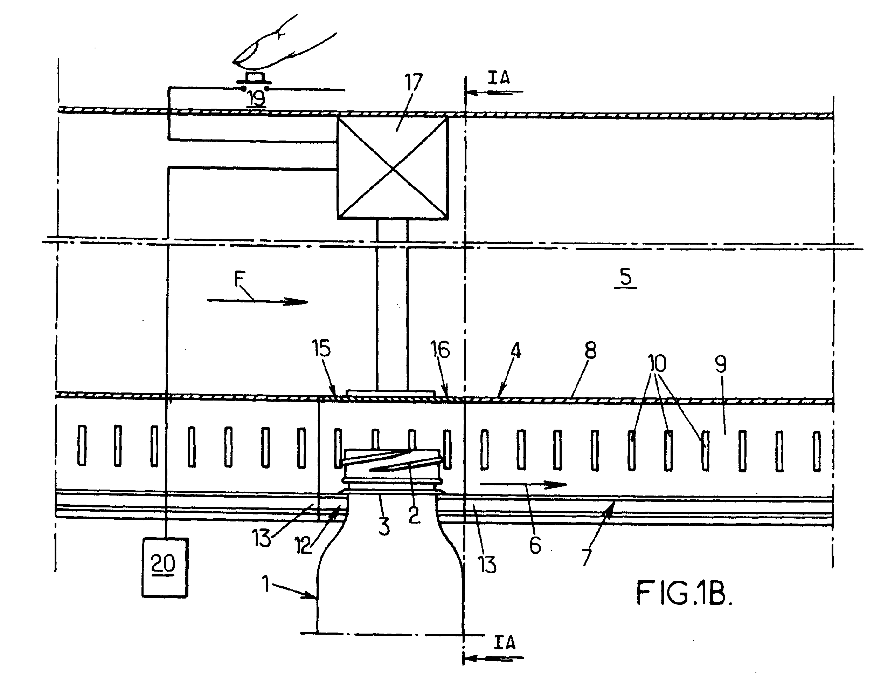

- les figures 1A et 1B sont deux vues schématiques, respectivement en coupe transversale selon la ligne IA-IA de la figure 1B et en coupe longitudinale selon la ligne IB-IB de la figure 1A, montrant, dans une première position fonctionnelle (position de convoyage), un premier mode de réalisation d'un tronçon d'un dispositif de convoyage, par soufflage d'air, de récipients à col illustrés sous forme de bouteilles ;

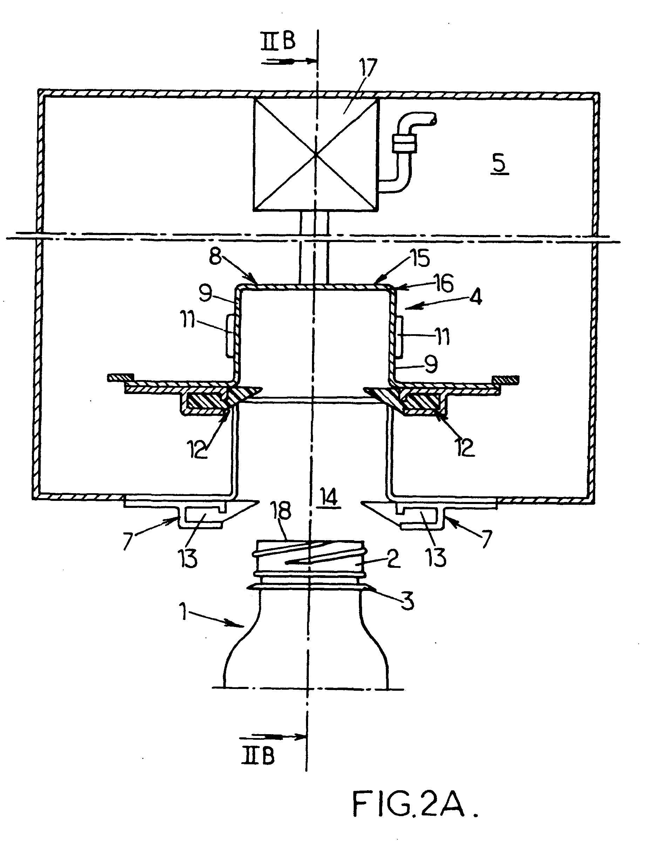

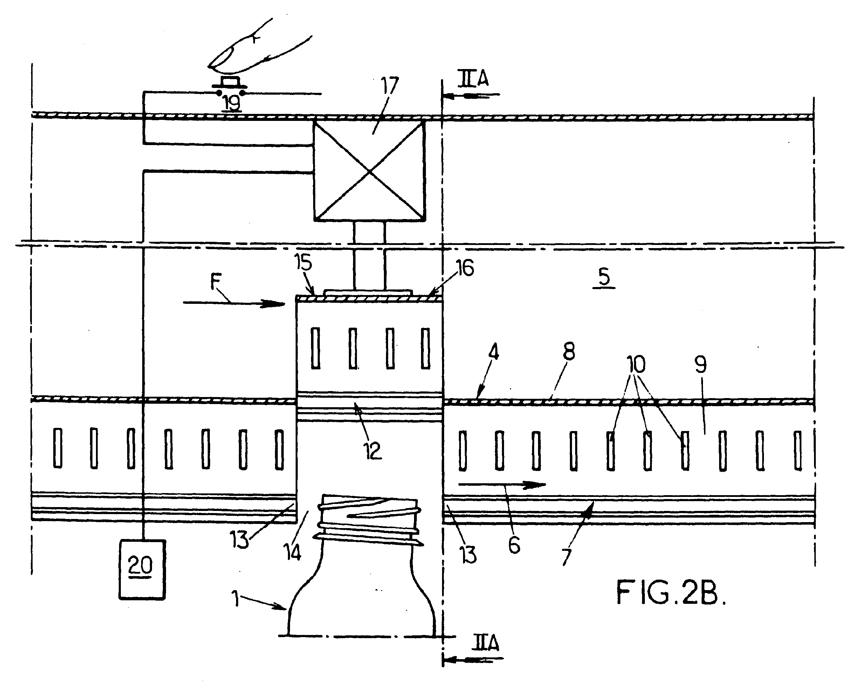

- les figures 2A et 2B sont deux vues schématiques, respectivement en coupe transversale selon la ligne IIA-IIA de la figure 2B et en coupe longitudinale selon la ligne IIB-IIB de la figure 2A, montrant, dans une seconde position fonctionnelle (position effacée ou position d'évacuation), le tronçon du dispositif de convoyage par soufflage d'air des figures 1A et 1B ;

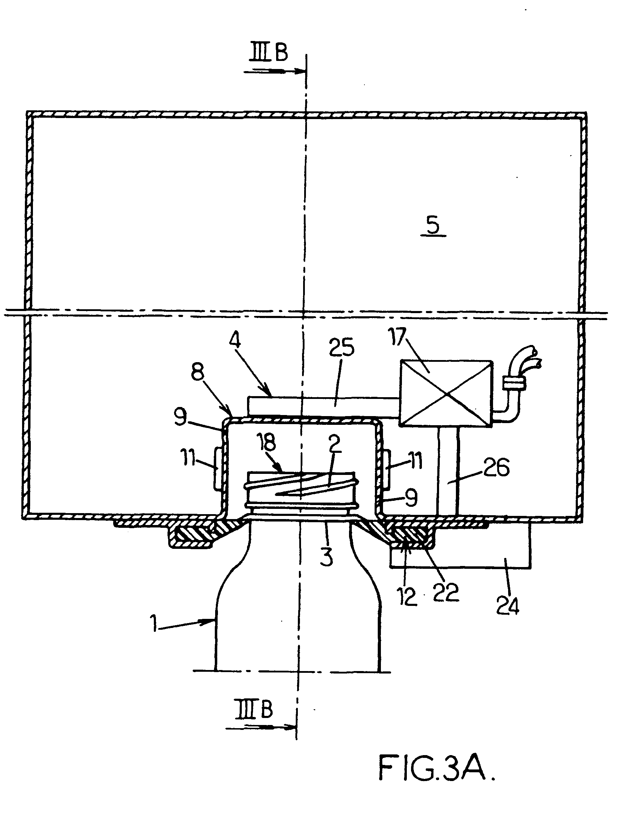

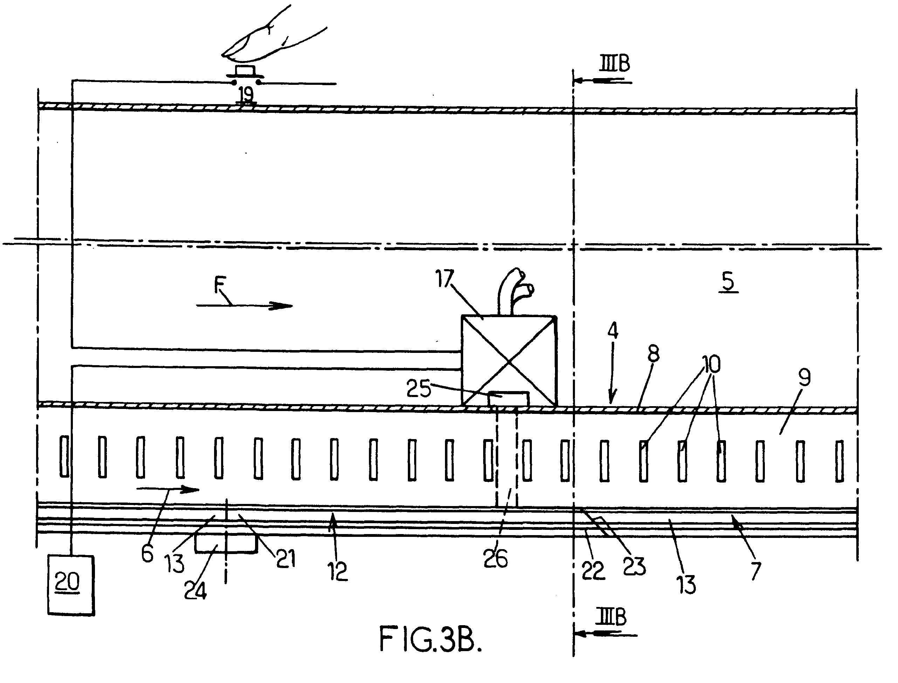

- les figures 3A et 3B sont deux vues schématiques, respectivement en coupe transversale selon la ligne IIIA-IIIA de la figure 3B et en coupe longitudinale selon la ligne IIIB-IIIB de la figure 3A, montrant, dans une première position fonctionnelle (position de convoyage), un second mode de réalisation d'un tronçon d'un dispositif de convoyage, par soufflage d'air, de récipients à col illustrés sous forme de bouteilles ;

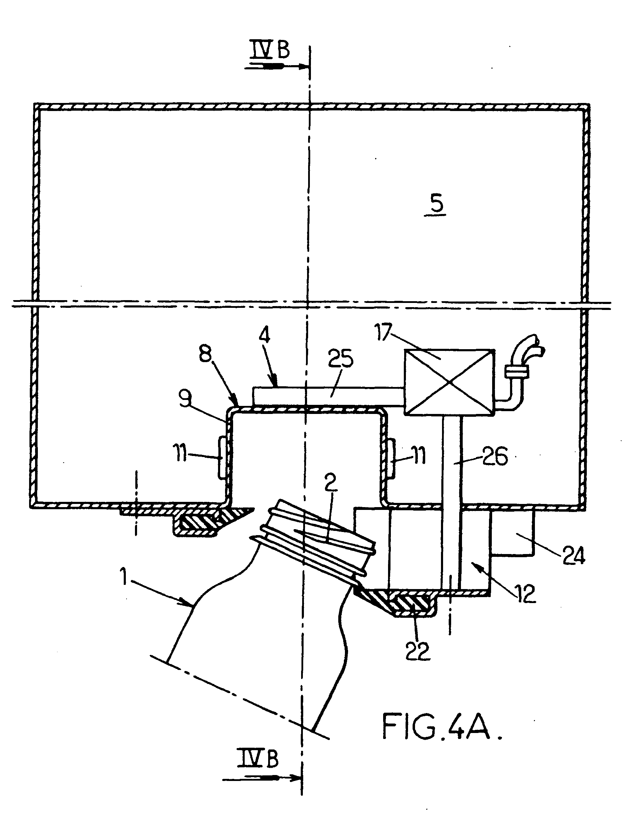

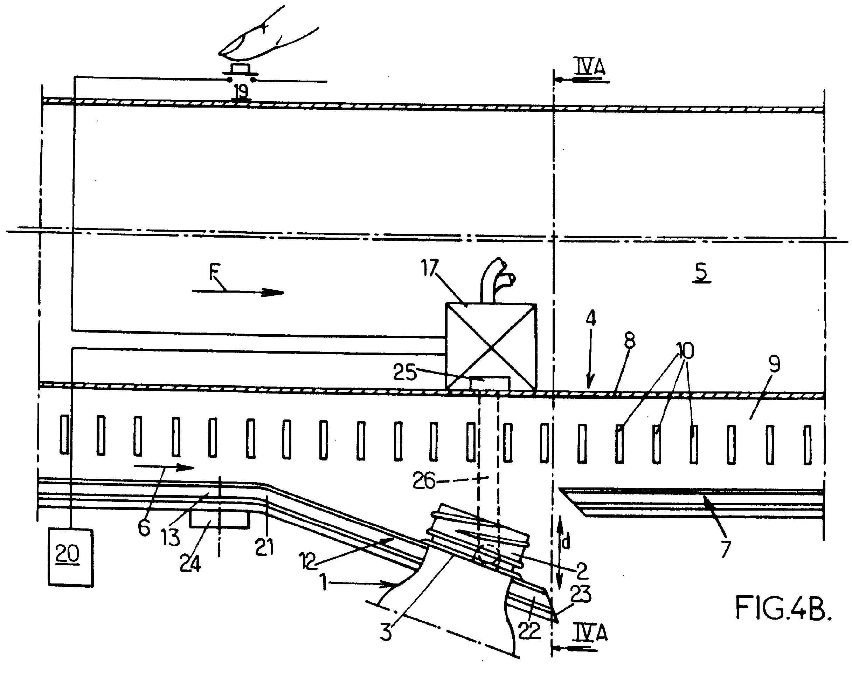

- les figures 4A et 4B sont deux vues schématiques, respectivement en coupe transversale selon la ligne IVA-IVA de la figure 4B et en coupe longitudinale selon la ligne IVB-IVB de la figure 4A, montrant, dans une seconde position fonctionnelle (position effacée ou position d'évacuation), le tronçon du dispositif de convoyage par soufflage d'air des figures 3A et 3B ;

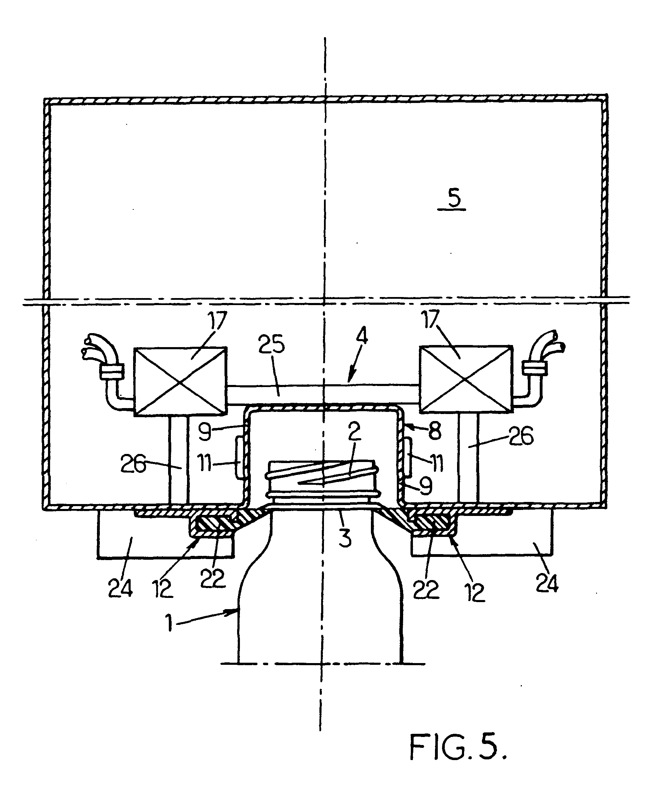

- la figure 5 est une vue schématique en coupe transversale analogue à celle de la figure 3A, montrant, dans une première position fonctionnelle (position de convoyage), un troisième mode de réalisation, qui est préféré, d'un tronçon d'un dispositif de convoyage, par soufflage d'air, de récipients à col illustrés sous forme de bouteilles ; et

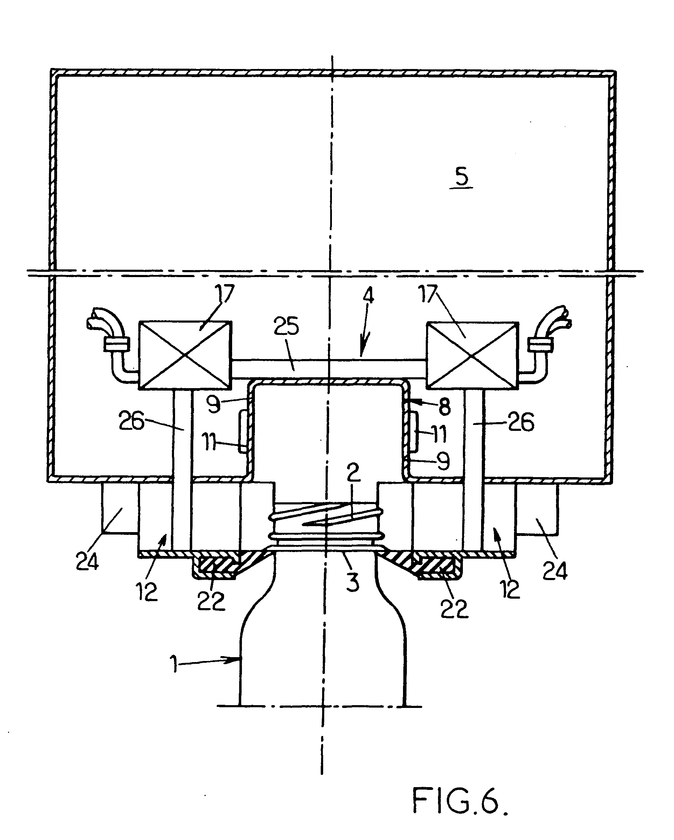

- la figure 6 est une vue schématique en coupe transversale analogue à celle de la figure 4A, montrant, dans une seconde position fonctionnelle (position effacée ou position d'évacuation), le tronçon du dispositif de convoyage par soufflage d'air de la figure 5.

En se référant tout d'abord aux figures 1A et 1B, un dispositif de convoyage d'objets par soufflage d'air pulsé est illustré plus particulièrement dans une configuration appropriée au déplacement de récipients 1 à col 2, et plus spécifiquement de récipients en matière thermoplastique telle que du PET, notamment préformes, bouteilles, flacons, bidons, etc., dont le col 2 est pourvu, à sa base ou au voisinage de sa base, d'une collerette 3 annulaire saillante, s'agissant là d'une application qui, bien que non exclusive, est plus particulièrement visée par l'invention.

Le dispositif de convoyage comprend, essentiellement, des moyens 4 de propulsion d'air sur les objets à déplacer, et plus précisément dans l'exemple considéré sur les cols 2 des récipients 1, de manière que ceux-ci soient déplacés selon une trajectoire (sur la figure 1B, le sens de déplacement des récipients est schématisé par une flèche 6). Le dispositif de convoyage comprend une source d'air pulsé (non montrée) et une chambre 5 de distribution de l'air pulsé le long des moyens 4 de propulsion (le sens d'écoulement de l'air pulsé dans la chambre 5 est représenté par une flèche F à la figure 1B, c'est-à-dire dans le sens de déplacement des récipients 1). La chambre 5 de distribution et les moyens 4 de propulsion s'étendent tout au long de la trajectoire des récipients 1 à convoyer.

La trajectoire des récipients est définie par des moyens de support et/ou de guidage comprenant deux rails 7 disposés en vis-à-vis, sensiblement parallèles l'un à l'autre et écartés l'un de l'autre, transversalement à la trajectoire 6 des récipients, d'une distance supérieure au diamètre du col 2 des récipients et inférieure au diamètre de la collerette 3 des récipients, de sorte que les récipients 1 reposent sur les rails 7 par leur collerette 3. De préférence, au moins la partie des rails 7 sur laquelle reposent les collerettes 3 est constituée en matériau à faible coefficient de frottement.

Les moyens 4 de propulsion comprennent une gaine 8, ouverte vers le bas, qui coiffe les rails 7, l'ensemble constitué par la gaine 8 et les deux rails 7 formant une gouttière ouverte vers le bas dans laquelle sont engagés les cols 2 des récipients 1. La gaine 8 peut avantageusement présenter une section droite de forme générale sensiblement rectangulaire et ses parois 9 latérales sont pourvues d'une multiplicité d'orifices 10 recouverts extérieurement d'une visière 11 ouverte vers l'amont (dans le sens F d'écoulement de l'air pulsé).

De plus amples détails sur ces dispositifs de convoyage par soufflage d'air pourront être trouvés par exemple dans les documents FR 2 780 713, FR 2 785 887, FR 2 793 228.

Conformément à l'invention, on se propose d'aménager ces dispositifs de convoyage par soufflage d'air de manière à pouvoir éjecter certains récipients isolément et/ou par groupe, notamment soit pour éliminer des récipients indésirables, soit pour recueillir des récipients à des fins de contrôle.

A ces fins, on prévoit, conformément à l'invention, que l'un au moins desdits rails 7 comporte un tronçon 12 de rail déplaçable qui est adjacent à une partie 13 fixe, située en amont et/ou en aval, dudit rail 7 et que des moyens 17 d'entraînement dudit tronçon 12 de rail, qui sont placés sous la dépendance de moyens de commande, soient propres à déplacer ledit tronçon 12 de rail entre deux positions fonctionnelles, à savoir :
- une première position ou position de convoyage (figures 1A et 1B) dans laquelle ledit tronçon 12 de rail est disposé dans l'alignement de ladite partie 13 fixe de rail située en amont et/ou en aval de manière à assurer la continuité du rail 7 et
- une seconde position ou position effacée (figures 2A et 2B) dans laquelle ledit tronçon 12 de rail est déplacé hors d'alignement avec la partie 13 fixe de rail située en amont et/ou en aval de manière à interrompre la continuité 14 du rail 7.

De façon courante, le récipient qui parvient dans la discontinuité 14 tombe dans un bac de recueil sous-jacent soit pour être ensuite utilisé pour un contrôle de fabrication, soit parce qu'il est indésirable (récipient hors standard, récipient présentant un défaut, etc.) et envoyé au rebut. Toutefois, d'autres possibilités d'utilisation sont envisageables, dont un exemple sera donné plus loin.

Diverses solutions techniques sont envisageables pour la mise en oeuvre pratique des dispositions générales qui viennent d'être exposées.

Une première solution peut consister en ce que le tronçon 12 de rail soit déplaçable sensiblement parallèlement à lui-même. Comme un déplacement du tronçon 12 de rail vers le bas risquerait de gêner, voire d'empêcher la chute du récipient à éliminer, il est avantageux que le tronçon 12 de rail soit déplaçable sensiblement parallèlement à lui-même vers le haut. Toutefois, du fait de la présence de la gaine 8, c'est un ensemble 15 constitué par un tronçon 16 de la gaine et deux tronçons 12 de rail correspondants en vis-à-vis qui doit être déplacé vers le haut.

Un mode de réalisation d'un tel agencement est illustré aux figures 1A, 1B et 2A, 2B.

Dans la position de convoyage montrée aux figures 1A et 1B, l'ensemble 15 est maintenu en position abaissée par les moyens 17 d'entraînement de manière telle que le tronçon 16 de gaine soit situé dans la continuité de la gaine 8 et que les deux tronçons 12 de rail soient situés dans la continuité des deux parties 13 fixes de rail respectivement.

Dans la position d'éjection montrée aux figures 2A et 2B, l'ensemble 15 est soulevé par les moyens 17 d'entraînement de manière telle que les deux tronçons de rail 12 soient situés au-dessus de la trajectoire suivie par les buvants 18 (bords supérieurs) des cols 2 des récipients 1. Le soulèvement de l'ensemble 15 engendre une discontinuité 14 par laquelle le ou les récipients 1 qui surviennent tombent hors du dispositif de convoyage.

Les moyens 17 d'entraînement sont placés sous la dépendance de moyens de commande qui peuvent être (figures 1B et 2B) des moyens 19 de commande manuelle pour la commande manuelle d'éjection de récipients 1 (par exemple pour recueillir des récipients à des fins de contrôle) et/ou des moyens 20 de commande automatique incluant des capteurs propres à détecter des récipients indésirables afin d'en assurer l'éjection.

Les moyens 17 d'entraînement peuvent être de tout type approprié à la fonction à assurer et à l'environnement du dispositif de convoyage. De façon pratique, dans l'exemple plus particulièrement envisagé les moyens 17 d'entraînement peuvent être pneumatiques ou électropneumatiques comme schématisé sur les dessins ou électromagnétiques.

Aux figures 3A, 3B et 4A, 4B est illustré un autre mode de réalisation des dispositions conformes à l'invention qui mettent en oeuvre la rotation, verticalement, d'un tronçon d'un des rails 7 (celui situé à droite sur les figures 3A et 4A).

A cet effet, comme mieux visible sur les figures 3B et 4B, le tronçon 12 de rail est défini entre une extrémité 21 de rotation située en amont (dans le sens de circulation de l'air pulsé) et une extrémité 22 libre située en aval, de préférence avec un bout 23 incliné propre à faciliter le raccordement avec la partie 13 fixe adjacente de rail. L'extrémité 21 pourrait certes être solidarisée à la partie 13 fixe de rail qui lui est adjacente par l'intermédiaire d'une articulation rotative. Toutefois, pour simplifier la structure et éviter les pièces frottantes sujettes à usure, il est intéressant que le tronçon 12 de rail soit intégral avec la partie 13 fixe située en amont qui lui est adjacente et que la rotation souhaitée soit obtenue grâce à la flexibilité du rail. L'emplacement de la flexion du rail est figé par une pièce 24 d'ancrage.

Les moyens 17 d'entraînement peuvent être supportés par la gaine 8 par l'intermédiaire d'une potence 25 ou analogue et sont solidaires du tronçon 12 de rail par l'intermédiaire d'une tige 26.

De la même manière que dans le mode de réalisation précédent, les moyens 17 d'entraînement sont supposés être de type pneumatique et placés sous la dépendance de moyens 19 de commande manuelle pour la commande manuelle d'éjection de récipients 1 (par exemple pour recueillir des récipients à des fins de contrôle) et/ou de moyens 20 de commande automatique incluant des capteurs propres à détecter des récipients indésirables afin d'en assurer l'éjection.

Dans la position relevée du tronçon 12 de rail qui est montrée aux figures 3A et 3B, le tronçon 12 de rail est disposé dans la continuité des parties 13 fixes de rail qui lui sont adjacentes en amont et en aval et les récipients 1 sont convoyés par l'air pulsé de façon normale.

Lorsque les moyens 17 d'actionnement sont commandés sous l'action d'un des moyens 19, 20 de commande possible, le tronçon 12 de rail est abaissé par rotation autour de son extrémité 21 amont (dans l'exemple illustré) avec une amplitude angulaire telle que la distance d séparant l'extrémité 22 libre du tronçon 12 de rail de l'extrémité en regard de la partie 13 fixe adjacente de rail soit au moins égale, et de préférence supérieure à la hauteur du col du récipient 1. Lorsqu'il parvient sur le tronçon 12 de rail ainsi incliné, le récipient 1 est déséquilibré sur un côté et se dégage du rail opposé fixe comme illustré à la figure 4A, puis il tombe.

On peut cependant souligner que le déséquilibre asymétrique que subit le récipient conduit à un balancement transversal du récipient qui vient se superposer à son déplacement axial. Ce mouvement complexe et quelque peu désordonné peut, notamment dans les dispositifs fonctionnant à très grande vitesse, se révéler gênant, voire même conduire à un coincement du récipient.

Pour éviter cet inconvénient, on pourra alors avoir de préférence recours au mode de réalisation illustré aux figures 5 et 6, qui est extrapolé du mode de réalisation précédent qui vient d'être exposé. Dans ce mode de réalisation préféré, ce sont les deux rails 7 des moyens de support et/ou de guidage qui sont pourvus de deux tronçons 12 de rail respectifs, situés en vis-à-vis, associés à des moyens d'entraînement qui sont soit communs, soit distincts et synchronisés comme montré aux figures 5 et 6. Dans l'exemple des figures 5 et 6, on reconduit deux fois l'agencement unitaire du mode de réalisation précédent montré aux figures 3A, 3B et 4A, 4B.

La figure 5 montre le mode de réalisation préféré en position relevée ou position de convoyage (la vue de côté est analogue à celle de la figure 3B).

La figure 6 montre le mode de réalisation préféré en position abaissée ou position d'éjection (la vue de côté est analogue à celle de la figure 4B), les deux tronçons 12 de rail étant alors inclinés vers le bas. Le récipient 1 est ainsi dévié vers le bas, hors de la trajectoire de convoyage normale, en restant en appui bilatéralement sur les deux tronçons 12 de rail par sa collerette 3. Le récipient 1 est éjecté en conservant une position verticale stable, sans être animé du mouvement désordonné rencontré dans le mode de réalisation précédent.

La description détaillée qui précède expose divers modes de réalisation du dispositif de l'invention dans le contexte de l'application à l'éjection de récipients hors d'une trajectoire, notamment aux fins de prélèvement de récipients pour des contrôles ou d'évacuation de récipients indésirables. Il est cependant également envisageable de concevoir que le dispositif de l'invention, dans son mode de réalisation préféré exposé en relation avec les figures 5 et 6, puisse être utilisé comme aiguillage vertical entre deux convoyeurs superposés propre à diriger les récipients 1 sur l'un ou sur l'autre de ces convoyeurs.

## Revendications

1. Dispositif de convoyage d'objets (1) par soufflage d'air, comportant des moyens de support et/ou de guidage desdits objets qui comprennent deux rails (7) disposés en vis-à-vis qui sont situés transversalement à distance l'un de l'autre et qui sont sensiblement parallèles l'un à l'autre formant parcours de convoyage d'objets (1), **caractérisé en ce que** l'un au moins desdits rails (7) comporte un tronçon (12) de rail déplaçable qui est adjacent à une partie (13) fixe, située en amont et/ou en aval, dudit rail et **en ce que** des moyens (17) d'entraînement dudit tronçon (12) de rail, qui sont placés sous la dépendance de moyens (19, 20) de commande, sont propres à déplacer ledit tronçon (12) de rail entre deux positions fonctionnelles, à savoir : une première position ou position de convoyage dans laquelle ledit tronçon (12) de rail est disposé dans l'alignement de ladite partie (13) fixe de rail située en amont et/ou en aval de manière à assurer la continuité dudit au moins un rail (7) et - une seconde position ou position effacée dans laquelle ledit tronçon (12) de rail est déplacé hors d'alignement avec la partie (13) fixe de rail située en amont et/ou en aval de manière à interrompre la continuité dudit au moins un rail (7), afin de créer, dans le parcours de convoyage des objets, une interruption permettant d'évacuer par gravité, un objet individuellement ou un groupe d'objets hors du flux d'objets déplacés.

2. Dispositif de convoyage selon la revendication 1, **caractérisé en ce que** le tronçon (12) de rail est déplaçable sensiblement parallèlement à lui-même.

3. Dispositif de convoyage selon la revendication 2, **caractérisé en ce que** le tronçon (12) de rail est déplaçable sensiblement parallèlement à lui-même vers le haut.

4. Dispositif de convoyage selon la revendication 1, **caractérisé en ce que** le tronçon (12) de rail est pivotant vers le bas autour de son extrémité (21) amont.

5. Dispositif de convoyage selon la revendication 4, **caractérisé en ce que** le tronçon (12) de rail est rotatif vers le bas autour de son extrémité (21) amont.

6. Dispositif de convoyage selon la revendication 5, **caractérisé en ce que** le tronçon (12) de rail est intégral avec la partie (:3) fixe de rail adjacente située en amont, **en ce que** ladite extrémité (21) amont est fermement ancrée par des moyens d'ancrage (24) et **en ce que** le tronçon (12) de rail est courbable à partir de cette extrémité (21) amont fermement ancrée.

7. Dispositif de convoyage selon l'une quelconque des revendications 1 à 6, **caractérisé en ce que** les deux rails (7) possèdent respectivement deux tronçons (12) de rail déplaçables conjointement.

8. Dispositif de convoyage selon l'une quelconque des revendications 1 à 7, **caractérisé en ce que** les moyens (17) d'entraînement sont du type électropneumatique.

9. Dispositif de convoyage selon l'une quelconque des revendications 1 à 7, **caractérisé en ce que** les moyens (17) d'entraînement sont du type électromagnétique.

10. Dispositif de convoyage selon l'une quelconque des revendications 1 à 9, **caractérisé en ce que** les moyens de commande comprennent au moins un capteur (20) propre à détecter un objet (1) indésirable devant être éjecté hors du dispositif de convoyage.

11. Dispositif de convoyage selon l'une quelconque des revendications 1 à 9, **caractérisé en ce que** les objets à déplacer sont des récipients (1), tels que préformes, bouteilles, flacons ou analogues, en matière thermoplastique possédant un col (2) muni d'une collerette (3) annulaire saillant radialement et propre à reposer sur les deux rails (7).

## Claims

1. A device for conveying objects (1) by air blowing, comprising means of supporting and/or guiding said objects, which comprise two facing rails (7) that are situated transversely apart from each other and are substantially parallel to each other forming an object (1) conveyance path, **characterised**
**in that** at least one of said rails (7) comprises a movable rail section (12) that is adjacent to a fixed portion (13), situated upstream and/or downstream, of such rail and
**in that** means of driving (17) said rail section (12), which are controlled by control means (19, 20), are capable of moving said rail section (12) between two operating positions, namely:
- a first position or conveying position in which said rail section (12) is arranged in line with said fixed rail portion (13) situated upstream and/or downstream in such a way as to ensure the continuity of said at least one rail (7) and
- a second position or retracted position in which said rail section (12) is moved out of alignment with said fixed rail portion (13) situated upstream and/or downstream in such a way as to interrupt the continuity of said at least one rail (7), so as to create, in the object conveyance path, a gap allowing for the removal by gravity of an individual object or a group of objects from the flow of moving objects.

2. The conveying device according to claim 1, **characterised in that** the rail section (12) is movable substantially parallel to itself.

3. The conveying device according to claim 2, **characterised in that** the rail section (12) is movable upwards substantially parallel to itself.

4. The conveying device according to claim 1, **characterised in that** the rail section (12) pivots downwards about its upstream end (21).

5. The conveying device according to claim 4, **characterised in that** the rail section (12) rotates downwards about its upstream end (21).

6. The conveying device according to claim 5, **characterised in that** the rail section (12) is integral with the adjacent fixed rail portion (13) situated upstream, **in that** said upstream end (21) is securely anchored by anchoring means (24) and **in that** the rail section (12) is bendable from this securely anchored upstream end (21).

7. The conveying device according to any one of claims 1 to 6, **characterised in that** the two rails (7) respectively have two rail sections (12) that can be moved jointly.

8. The conveying device according to any one of claims 1 to 7, **characterised in that** the driving means (17) are of an electropneumatic type.

9. The conveying device according to any one of claims 1 to 7, **characterised in that** the driving means (17) are of an electromagnetic type.

10. The conveying device according to any one of claims 1 to 9, **characterised in that** the control means comprise at least one sensor (20) capable of detecting an unwanted object (1) that must be ejected from the conveying device.

11. The conveying device according to any one of claims 1 to 9, **characterised in that** the objects to be moved are containers (1), such as preforms, bottles, flasks or similar, made from a thermoplastic material, having a neck (2) equipped with an annular collar (3) projecting radially and capable of resting on the two rails (7).

## Patentansprüche

1. Transportvorrichtung für Objekte (1) durch einen Luftstrom, die ein Unterstützungsmittel und/oder ein Führungsmittel für die Objekte einschließt, das zwei gegenüberstehend angeordnete Schienen (7) aufweist, die quer in einem Abstand zueinander angeordnet sind, im Wesentlichen parallel zueinander sind und einen Transportweg für Objekte (1) ausbilden, **dadurch gekennzeichnet, dass** mindestens eine der Schienen (7) ein versetzbares Schienenstück (12) aufweist, das an einem stromabwärts und/oder stromaufwärts platzierten feststehenden Schienenabschnitt (13) anliegt, und dass ein von einem Steuerungsmittel (19, 20) abhängig angeordnetes Antriebsmittel des versetzbaren Schienenstücks (12) geeignet ist, das Schienenstück (12) zwischen zwei funktionellen Positionen zu versetzen, und zwar: einer ersten Position oder Transportposition, in der das Schienenstück (12) an dem stromaufwärts und/oder stromabwärts platzierten feststehenden Schienenabschnitt (13) ausgerichtet angeordnet ist, sodass der Fortlauf der mindestens einen Schiene (7) gewährleistet ist, und - einer zweiten Position oder Rückstellposition, in der das Schienenstück (12) außerhalb der Flucht zu dem stromaufwärts und/oder stromabwärts platzierten feststehenden Schienenabschnitt (13) versetzt ist, sodass der Fortlauf der mindestens einen Schiene (7) unterbrochen ist, um in dem Transportweg für Objekte (1) eine Unterbrechung zu erzeugen, die eine Abgabe eines einzelnen Objekts oder einer Gruppe von Objekten aus dem Strom der versetzten Objekte über die Schwerkraft ermöglicht.

2. Transportvorrichtung nach Anspruch 1, **dadurch gekennzeichnet, dass** das Schienenstück (12) im Wesentlichen parallel zu sich selbst versetzbar ist.

3. Transportvorrichtung nach Anspruch 2, **dadurch gekennzeichnet, dass** das Schienenstück (12) im Wesentlichen parallel zu sich selbst nach oben versetzbar ist.

4. Transportvorrichtung nach Anspruch 1, **dadurch gekennzeichnet, dass** das Schienenstück (12) um sein stromaufwärtiges Ende (21) nach unten schwenkbar ist.

5. Transportvorrichtung nach Anspruch 4, **dadurch gekennzeichnet, dass** das Schienenstück (12) um sein stromaufwärtiges Ende (21) nach unten drehbar ist.

6. Transportvorrichtung nach Anspruch 5, **dadurch gekennzeichnet, dass** das Schienenstück (12) mit dem angrenzenden stromaufwärts platzierten feststehenden Schienenabschnitt (13) aus einem Stück ist, dass das stromaufwärtige Ende (21) fest mit einem Verankerungsmittel (24) verankert ist und das das Schienenstück (12) ausgehend von dem stromaufwärtigen fest verankerten Ende (21) biegbar ist.

7. Transportvorrichtung nach einem der Ansprüche 1 bis 6, **dadurch gekennzeichnet, dass** die zwei Schienen (7) jeweils zwei zusammen versetzbare Schienenstücke (12) aufweisen.

8. Transportvorrichtung nach einem der Ansprüche 1 bis 7, **dadurch gekennzeichnet, dass** das Antriebsmittel (17) elektropneumatisch ist.

9. Transportvorrichtung nach einem der Ansprüche 1 bis 7, **dadurch gekennzeichnet, dass** das Antriebsmittel (17) elektromagnetisch ist.

10. Transportvorrichtung nach einem der Ansprüche 1 bis 9, **dadurch gekennzeichnet, dass** das Steuermittel mindestens einen Sensor (20) aufweist, der zum Erfassen eines ungewünschten Objekts (1) geeignet ist, bevor es aus der Transportvorrichtung ausgeworfen wird.

11. Transportvorrichtung nach einem der Ansprüche 1 bis 9, **dadurch gekennzeichnet, dass** die zu versetzenden Objekte Behälter (1) sind, wie zum Beispiel Vorformlinge, Flaschen, Flakons und dergleichen, aus thermoplastischem Material, die einen Hals (2) aufweisen, der mit einem ringförmigen Kragen (3) ausgestattet ist, der radial hervorsteht und geeignet ist, auf den zwei Schienen (7) aufzuliegen.
